# EUROPÄISCHE PATENTSCHRIFT

(11) **EP 1 733 153 B1**
(45) Veröffentlichungstag und Bekanntmachung des Hinweises auf die Patenterteilung: **29.07.2009**
(21) Anmeldenummer: 05716491.5
(22) Anmeldetag: 01.04.2005
(51) Int. Cl.: F16H 57/02

(54) **STIRNRADGETRIEBE**
SPUR GEAR TRANSMISSION
TRANSMISSION PAR ENGRENAGE CYLINDRIQUE

(30) Priorität: 02.04.2004 EP 04008064
(43) Veröffentlichungstag der Anmeldung: 20.12.2006
(73) Patentinhaber: Getriebebau NORD GmbH & Co. KG, 22941 Bargteheide (DE)
(72) Erfinder: BOUCHE, Bernhard, 22941 Bargteheide (DE); RÜDDENKLAU, Dieter, 22941 Bargteheide (DE); KÜCHENMEISTER, Gustav, Adolf, 22391 Hamburg (DE)
(74) Vertreter: Glawe, Delfs, Moll
(86) Internationale Anmeldenummer: PCT/EP2005/003427
(87) Internationale Veröffentlichungsnummer: WO 2005/095824

(56) Entgegenhaltungen:
- EP-A- 0 507 309
- EP-A- 0 686 788
- FR-A- 2 441 108
- GB-A- 1 227 232
- TORELLI C: "UNIVERSELL EINSETZBARE GETRIEBE MIT MONOBLOCK-GEHAUSE" ANTRIEBSTECHNIK, KRAUSSKOPF VERLAG FUR WIRTSCHAFT GMBH. MAINZ, DE, Bd. 31, Nr. 8, 1. August 1992 (1992-08-01), Seiten 50,53-54,56, XP000298656 ISSN: 0722-8546

## Beschreibung

Die Erfindung betrifft ein mindestens zweistufiges Stirnradgetriebe gemäß dem Oberbegriff des Anspruchs 1. Sie setzt ein Getriebe als bekannt voraus (EP-B-686 788), das ein einstückiges Gehäuse mit einer abtriebsseitigen Kammer zwischen einer abtriebsseiten Wand und einer Zwischenwand und einer antriebsseitigen Kammer zwischen der Zwischenwand und einer Deckelöffnung aufweist. Seine Abtriebswelle ist einerseits in einem abtriebsseitigen Lager gelagert, das in einer abtriebsseitigen Lagerbohrung in der abtriebsseitigen Gehäusewand angeordnet ist. Sie ist andererseits in einem abtriebsfernen Lager in der Zwischenwand gelagert und trägt zwischen beiden Lagern in der abtriebsseitigen Kammer ein Abtriebszahnrad. Dies wird angetrieben von dem Ritzel einer Zwischenwelle, die in der antriebsseitigen Kammer ein Zwischenzahnrad trägt und die mindestens in einer Lagerbohrung der Zwischenwand gelagert ist. Die einstückige Ausbildung des Gehäuses hat beträchtliche Vorteile hinsichtlich der Gehäusesteifigkeit, aber wird in der bekannten Konstruktion mit schweren Nachteilen erkauft. Zu diesen Nachteilen gehört eine schräge Teilung der antriebsseitigen Kammer, die sich bis über die abtriebsseitige Kammer erstreckt, um dort Platz für die Montage des abtriebsseitigen Zahnrads zu schaffen. Es wird deshalb im allgemeinen eine Konstruktion vorgezogen, bei welcher für die Montage dieses Zahnrads eine besondere Einbauöffnung oder ein besonderer abtriebsseitiger Deckel (Prospekt SEW Eurodrive) oder eine ausbaubare Zwischenwand (DE-B-1032635) vorgesehen ist. Diese Bauarten haben aber den Nachteil, daß sie aufwendig in der Herstellung sind, die Stabilität des Gehäuses mindern und ein erhöhtes Risiko des Ölaustritts aufgrund von Undichtigkeiten bieten. Auch ist die Montage aufwendig, weil das abtriebsseitige Zahnrad und die zugehörigen Lager in der Regel erst innerhalb des Gehäuses mit der Welle verbunden werden können, was aufgrund der beengten Platzverhältnisse kompliziert ist.

Bekannt sind auch Getriebe, bei denen beide Getriebestufen in derselben Kammer angeordnet sind, was eine fliegende Lagerung der Abtriebswelle auf der Abtriebsseite verlangt. Dies ist ebenfalls montageaufwendig und erhöht die Baulänge und das Gewicht (EP-B-69215; EP-A-507309, Fig. 3).

Der Erfindung liegt die Aufgabe zugrunde, ein Getriebe zu schaffen, dessen Gehäuse unaufwendig herstellbar ist und dennoch große Steifigkeit aufweist und eine einfache Montage ermöglicht.

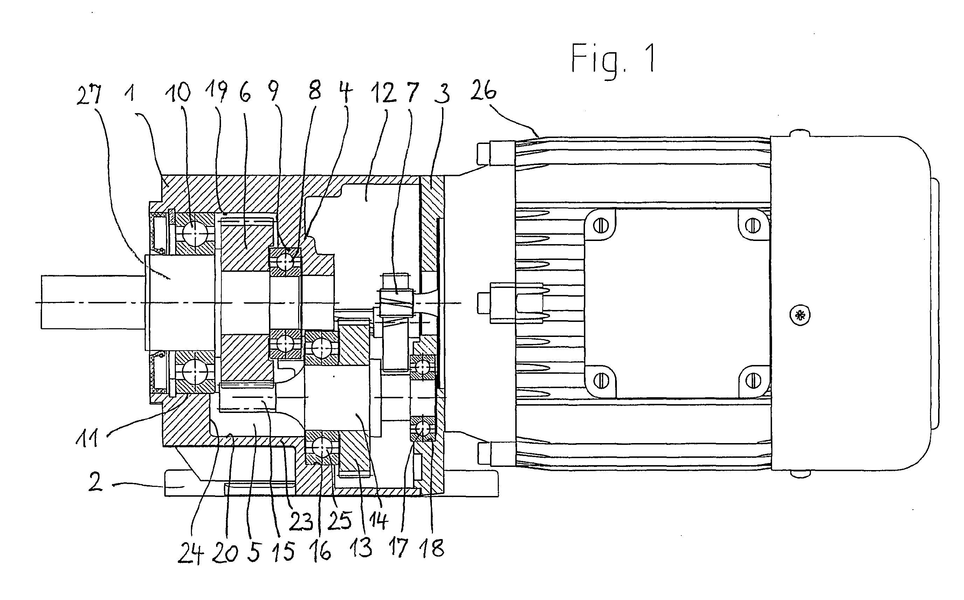

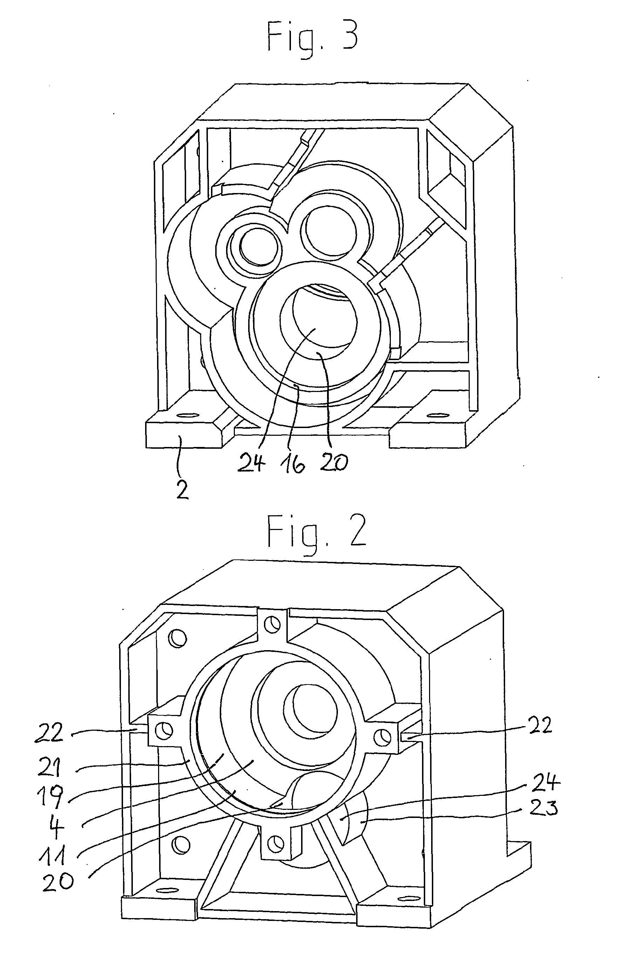

Die erfindungsgemäße Lösung liegt in zwei Erfindungsschritten. Gemäß dem ersten Erfindungsschritt weist die abtriebsseitige Lagerbohrung einen größeren Durchmesser als das Abtriebszahnrad und das abtriebsferne Lager auf, so daß die Abtriebswelle mit dem Abtriebszahnrad und ihren beiden Lagern als vormontierte Einheit durch die abtriebsseitige Lagerbohrung montierbar ist. Die abtriebsseitige Kammer benötigt für die Montage dieser vormontierten Einheit keine weitere Montageöffnung. Dies ist für einstufige Getriebe mit nur einer Gehäusekammer bekannt (EP-A-507309, Fig. 1, 2 und 4), wobei aber offen bleibt, ob und wie dieser Gedanke für den Fall eines mehrstufigen Getriebes anzuwenden ist. Dafür wird vielmehr auf eine herkömmliche Konstruktion (Fig. 3, siehe oben) verwiesen. Außerdem fehlt ein Hinweis, wie das Gehäuse unaufwendig hergestellt werden könnte, da der Gehäuseraum kompliziert aufgebaut ist mit starken Hinterschnitten, die nur durch Gußkerne geformt werden können.

Der zweite Erfindungsschritt besteht darin, daß das Gehäuse so geformt wird, daß es trotz seiner vielfältigen Lagerfunktionen unaufwendig hergestellt werden kann, nämlich beispielsweise im Druckgußverfahren. Voraussetzung dafür ist die hinterschnittfreie Formgebung von zwei entgegengesetzten Seiten. Sie gelingt dadurch, daß die abtriebsseitige Kammer ausschließlich von zwei Flächen begrenzt ist, von denen die erste, die dem Bereich der Abtriebswelle zugeordnet ist, hinterschnittfrei an die abtriebsseitige Lagerbohrung anschließt und von denen die zweite, die dem Bereich der Zwischenwelle bzw. des Ritzels zugeordnet ist, hinterschnittfrei an die in der Zwischenwand für die Zwischenwelle vorgesehene Öffnung anschließt, wobei die zweite Fläche sowie die die antriebsseitige Kammer begrenzenden Flächen sich auch hinterschnittfrei an die Deckelöffnung anschließen.

Dadurch kann derjenige Teil der abtriebsseitigen Kammer, der der Abtriebswelle zugeordnet ist, von der Seite der einen Seite her ohne Benutzung eines Kerns geformt werden, während die antriebsseitige Kammer samt demjenigen Teil der abtriebsseitigen Kammer, der dem Ritzel zugeordnet ist, von der Seite der Deckelöffnung her kernlos geformt werden kann. Dies eröffnet die Möglichkeit rationeller und genauer Herstellung beispielsweise im Druckgußverfahren. Außerdem hat dies den Vorteil, daß die Wellen samt ihren Zahnrädern und Lagern als vormontierte Einheiten eingesetzt werden können.

Der Stand der Technik bietet dafür kein Vorbild. Zwar ist es bekannt, in einem Gehäuse eines einstufigen Schneckengetriebes die beiden zur Aufnahme des Schneckenrads bzw. der Schnecke dienenden Räume jeweils für sich hinterschnittfrei zu gestalten (FR-A-2441108). Da sie aber lotrecht zueinander stehen, kann das Gehäuse nicht auf einfache Weise von entgegengesetzten Seiten her kernlos geformt werden. Auch können nicht beide Wellen mit ihren Lagern und Rädern als vormontierte Einheit eingesetzt werden, weil bei der Montage des letzten der beiden Teile ein zugehöriges Lager nicht an dem Rad des anderen Teils vorbeigeführt werden kann.

Besonders vorteilhaft ist es, wenn das mit dem abtriebsseitigen Zahnrad kämmende Ritzel fliegend gelagert ist, so dass es keine Montagearbeiten oder Montageöffnungen in der abtriebsseitigen Kammer verlangt. Die das Ritzel tragende Zwischenwelle ist mit dem von ihr getragenen Zwischenzahnrad als vormontierte Einheit von der Antriebsseite her in die Lagerbohrung der Zwischenwand einsetzbar.

Auf diesen Vorteil braucht aber auch dann nicht verzichtet zu werden, wenn das Ritzelende der Zwischenwelle in der abtriebseitigen Wand in einem abtriebsseitigen Zwischenwellenlager gelagert ist. Auch dann kann die vormontierte Einheit der Zwischenwelle einschließlich des abtriebsseitigen Zwischenwellenlager von der Antriebsseite her montiert werden. Ohne weiteres ist dies möglich, wenn der Durchmesser des abtriebsseitigen Zwischenwellenlagers kleiner ist als der Kerndurchmesser des Ritzels, was allerdings nicht oft der Fall ist. Ferner ist dies möglich, wenn die Lagerbohrung in der Zwischenwand wesentlich größer als das Ritzellager ist und zwischen dem Abtriebszahnrad und dem die Lagerbohrung für das abtriebsseitige Zwischenwellenlager bildenden Gehäuseteil mindestens soviel Abstand ist, wie es der Breite des Ritzellagers entspricht. Dann kann die Zwischenwelle mit dem abtriebsseitigen Zwischenwellenlager und dem Ritzel an dem Abtriebszahnrad vorbeigeführt werden, bis das Lager den die zugehörige Lagerbohrung bildenden Gehäuseteil erreicht. Danach wird die Zwischenwelle parallel zur Abtriebswelle ausgerichtet und kann nun vorgeschoben werden, um das abtriebsseitige Zwischenwellenlager in die zugehörige Lagerbohrung einzuführen.

Besonders vorteilhaft ist es wenn die in der Zwischenwand vorgesehene Lagerbohrung auf der der Abtriebswelle fernliegenden Seite zu einer Montageöffnung erweitert ist, die größer ist als das abtriebsseitige Zwischenwellenlager. Der sich daran hinterschnittfrei anschließende Teil der abtriebsseitigen Kammer ist hinreichend weit, um die Durchführung der Zwischenwelle in einer gegenüber ihrer Endstellung schräg oder parallel versetzten Lage zu gestatten. Die Hinterschnittfreiheit der abtriebsseitigen Kammer in diesem Bereich gilt dann nicht nur im Verhältnis zu der in der Zwischenwand für die Zwischenwelle vorgesehenen Lagerbohrung sondern auch zu deren Erweiterung.

Nach einem besonderen Merkmal der Erfindung ist die Zwischenwelle dreifach gelagert, nämlich in der abtriebsseitien Wand des Gehäuses, in der Zwischenwand und im Deckel. Dadurch wird eine günstige Belastung und Dimensionierung der Lager erreicht, die Voraussetzung für eine gedrängte und kostengünstige Bauweise ist. Außerdem wird mittels des deckelseitigen Lagers eine einfache Möglichkeit zur Zentrierung des Deckels erreicht. Diese reicht aus, wenn das Getriebe zweistufig ist. Im Falle eines dreistufigen Getriebes tritt eine ergänzende Zentrierung hinzu, die zwei Paare von gegensinnig zusammenwirkenden Flächen umfaßt, die einen unter 90° liegenden Winkel mit einem von der Achse der Zwischenwelle ausgehenden Radius einschließen.

Weitere Merkmale der Erfindung ergeben sich aus der nun folgenden Beschreibung der in der Zeichnung dargestellten Ausführungsbeispiele. Es zeigen:
- Fig. 1: einen Längsschnitt eines ersten Ausführungsbeispiels mit angeflanschtem Motor,
- Fig. 2: eine perspektivische Ansicht des leeren Gehäuses dieses Ausführungsbeispiels von der Abtriebsseite und
- Fig. 3: eine entsprechende Ansicht von der Antriebsseite,
- Fig. 4: einen Längsschnitt durch ein zweites Ausführungsbeispiel gemäß Linie IV-IV der Fig. 7,
- Fig. 5 und 6: perspektivische Ansichten des leeren Gehäuses des zugehörigen Deckels,
- Fig. 7: eine Ansicht des geöffneten Gehäuses von der Antriebsseite her mit Zwischenwelle,
- Fig. 8: eine vereinfachte Darstellung entsprechend Fig. 7 ohne Zwischenwelle,
- Fig. 9: einen Schnitt gemäß Linie IX-IX der Fig. 4,
- Fig. 10: einen Ausschnitt aus Fig. 8 und
- Fig. 11 bis 14: aufeinanderfolgende Stadien der Montage der Zwischenwelle.

Das von links unten nach rechts oben in Fig. 1 schraffierte Getriebegehäuse 1 des ersten Ausführungsbeispiels hat einen Fuß 2, eine Zwischenwand 4 und eine antriebsseitige Öffnung, die von einem Deckel 3 geschlossen wird, an den im dargestellten Beispiel ein Motor 26 mit in das Getriebegehäuse hineinragender Ritzelwelle 7 angeflanscht ist. Abtriebsseitig von der Zwischenwand 4 ist eine Kammer 5 gebildet, der das Zahnrad 6 der Abtriebswelle 27 aufnimmt, die einerseits durch ein abtriebsfernes Lager 8 in einer abtriebsfernen Lagerbohrung 9 der Zwischenwand 4 und andererseits durch ein abtriebsseitiges Lager 10 in einer abtriebsseitigen Lagerbohrung 11 gelagert ist. Auf der Antriebsseite der Zwischenwand 4 befindet sich eine antriebsseitige Kammer 12, in welchem sich eine oder mehrere Getriebestufen befinden, von denen im vorliegenden Fall lediglich das Zwischenzahnrad 13 auf einer Zwischenwelle 14 gezeigt ist, die durch ein Lager 25 in einer Lagerbohrung 16 der Zwischenwand (4) sowie durch ein Lager 17 in einer Lagerbohrung 18 des Deckels 3 gelagert ist. Sie trägt fliegend am Ende ein Ritzel 15, das mit dem Abtriebszahnrad 6 kämmt .

Der Durchmesser der abtriebsseitigen Lagerbohrung 11 ist größer als der Durchmesser des Abtriebszahnrads 6. Demzufolge besteht die Möglichkeit, die vormontierte Einheit der Welle 27 mit dem Abtriebszahnradahnrad 6 sowie gegebenenfalls einem oder zwei Lagern 8, 10 als vormontierte Einheit von der Abtriebsseite her durch die abtriebsseitige Lagerbohrung 11 hindurch zu montieren. Ebenso besteht die Möglichkeit, die Zwischenwelle 14 als Montageeinheit mit dem Zwischenzahnrad 13 und gegebenenfalls einem oder zwei Lagern 25, 17 als vormontierte Einheit von der Antriebsseite des Getriebes her bei offenem Deckel 3 zu montieren. Der Montageaufwand ist entsprechend gering. Gleichzeitig wird der Vorteil erreicht, dass das gesamte Getriebegehäuse mit Ausnahme des antriebsseitigen Deckels 3 einstückig ausgebildet ist und entsprechend steif ist.

Die abtriebsseitige Kammer 5, die das Abtriebszahnrad 6 enthält, wird von zwei zylindrischen Flächen 19, 20 begrenzt. Die eine Zylinderfläche 19 schließt sich im Bereich der Abtriebswelle 27 hinterschnittfrei an die abtriebsseitige Lagerbohrung 11 an. Die andere Fläche 20 schließt sich im Bereich der Zwischenwelle 14 von der entgegengesetzten Richtung her hinterschnittfrei an die Lagerbohrung 16 in der Zwischenwand an. Das bedeutet nicht, dass diese Flächen 19, 20 den selben Durchmesser wie die zugehörigen Lagerbohrungen 11, 16 haben müssen. Aus wirtschaftlichen Gründen wird man aber die Lagerbohrung 11 nicht wesentlich größer machen, als es der Durchmesser des Abtriebszahnrads 6 verlangt. Das läuft darauf hinaus, dass die Fläche 19 im wesentlichen den gleichen Durchmesser hat wie die Lagerbohrung 11. Eine solche Beziehung besteht nicht zwischen der Fläche 20 und der Lagerbohrung 16 in der Zwischenwand 4. Man erkennt in Fig. 3, daß sie gegeneinander abgestuft sind.

Man erkennt ferner in Fig. 2, daß der obere Teil der abtriebsseitigen Kammer 5 im Bereich der Abtriebswelle 27 lediglich von einer zylindrischen Wand 21 gebildet ist, in deren Mündungsöffnung sich die abtriebsseitige Lagerbohrung 11 für das abtriebsseitige Lager 10 befindet. Sie kann der besseren Steifheit wegen durch Streben 22 mit anderen Teilen des Getriebegehäuses verbunden sein. In ähnlicher Weise kann der untere Teil der Kammer 5, der den Bereich der zwischenwelle 14 bildet, von einer im wesentlichen zylindrischen Wand 23 gebildet sein, die abtriebsseitig durch einen Boden 24 abgeschlossen ist.

Die perspektivischen Darstellungen in Fig. 2 und 3 machen verständlich, daß das Gehäuse sowohl von der Abtriebsseite als auch von der Antriebsseite her ausschließlich Flächen aufweist, die hinterschnittfrei geformt sind.

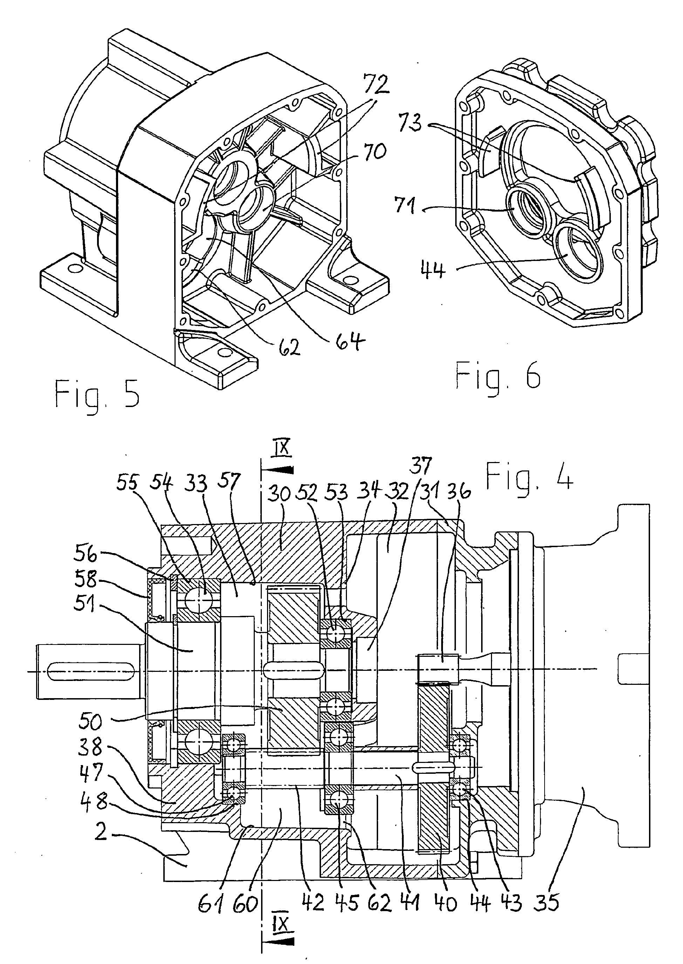

Im zweiten Ausführungsbeispiel (Fig. 4 bis 14) bildet das Gehäuse 30 eine antriebsseitige Kammer 32, deren Öffnung von dem Deckel 31 geschlossen ist, und eine abtriebsseitige Kammer 33. Die beiden Kammern 32, 33 sind durch eine Zwischenwand 34 voneinander getrennt. An den Deckel 31 ist eine Antriebseinheit 35 angeflanscht, deren Ritzel 36 in die antriebsseitige Kammer 32 hineinragt. Die Antriebseinheit kann von einem Antriebsmotor oder einem Zwischengehäuse gebildet sein, das ein besonderes Lager für die Welle des fliegend gelagerten Ritzels 36 bildet. Alternativ kann diese Welle auch jenseits des Ritzels 36 durch ein nicht dargestelltes Lager in der Lagerbohrung 37 der Zwischenwand 34 gelagert sein.

Das Ritzel 36 wirkt auf ein Zwischenzahnrad 40, das auf einer Zwischenwelle 41 sitzt, die ein Zwischenritzel 42 bildet. Sie ist dreifach gelagert, nämlich durch ein Lager 43 in einer Lagerbohrung 44 des Deckels 31, durch ein Lager 45 in einer Lagerbohrung 46 der Zwischenwand 34 und ein Lager 47 in einer Lagerbohrung 48 in der abtriebsseitigen Wand 38 der abtriebsseitigen Kammer 33. Die Zwischenwelle 41 ist in ihrer Längsrichtung im Gehäuse durch Absätze festgelegt, welche die Lagerbohrungen 44 und 48, begrenzen.

Das Zwischenritzel 42 wirkt auf ein Abtriebszahnrad 50 auf der Abtriebswelle 51, die durch ein Lager 52 in einer Lagerbohrung 53 der Zwischenwand 34 sowie durch ein Lager 54 in einer Lagerbohrung 55 am abtriebsseitigen Ende des Gehäuses gelagert ist. Die Abtriebswelle 51 mit den zugehörigen Teilen ist durch einen Sprengring 56 vor dem Lager 54 im Gehäuse gesichert.

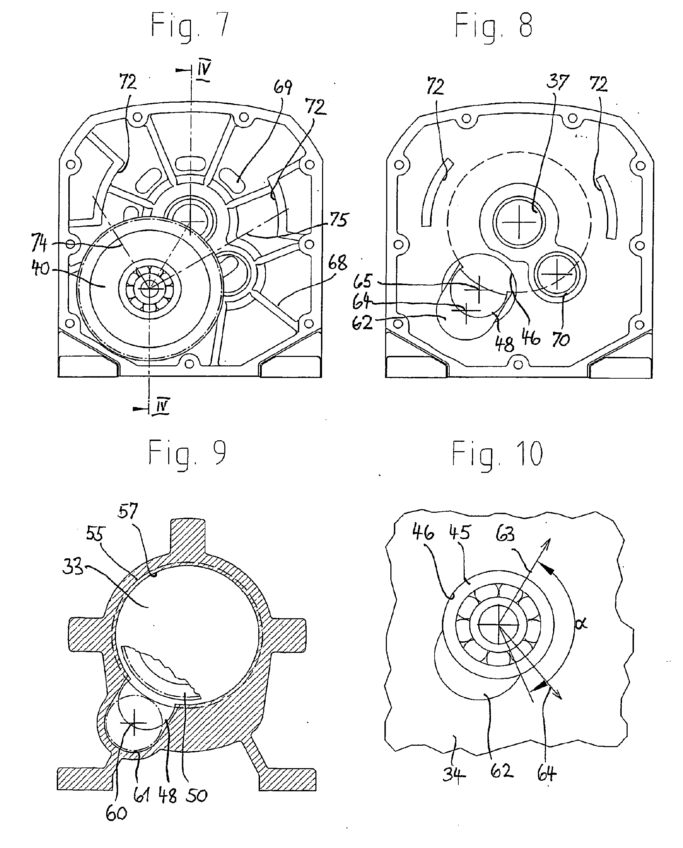

Wie in Fig. 7 erkennbar, kann die Zwischenwand 34 durch Rippen 68 verstärkt sein und Durchbrechungen 69 enthalten, die in einigen anderen Darstellungen einfachheitshalber weggelassen sind.

Die die antriebsseitige Kammer 32 bildenden Flächen schließen sich hinterschnittfrei an die Öffnung an, die durch den Deckel 31 geschlossen ist. Sie können daher ohne verlorenen Kern im Druckgußverfahren geformt werden. Derjenige Bereich der abtriebsseitigen Kammer 33, in welchem sich die Abtriebswelle 51 befindet und der in Fig. 9 durch die Fläche 57 begrenzt erscheint, schließt sich hinterschnittfrei an deren abtriebsseitige Öffnung an, die von der Lagerbohrung 55 und den gegebenenfalls abtriebsseitig davon gelegenen Bohrungsflächen zur Aufnahme eines Wellendichtrings 58 gebildet wird, und kann daher ebenfalls kernlos geformt werden.

Die abtriebsseitige Kammer 33 weist für die Aufnahme der Zwischenwelle 41 eine Erweiterung 60 auf, die abtriebsseitig durch die Wand 38 begrenzt ist und daher nicht von derselben Seite her wie der zur Abtriebswelle 51 gehörige Bereich geformt werden kann. Um kernlos von der entgegengesetzten Seite her geformt werden zu können, schließt sich ihre Oberfläche 61 hinterschnittfrei an eine entsprechende Montageöffnung 62 in der Zwischenwand 34 an.

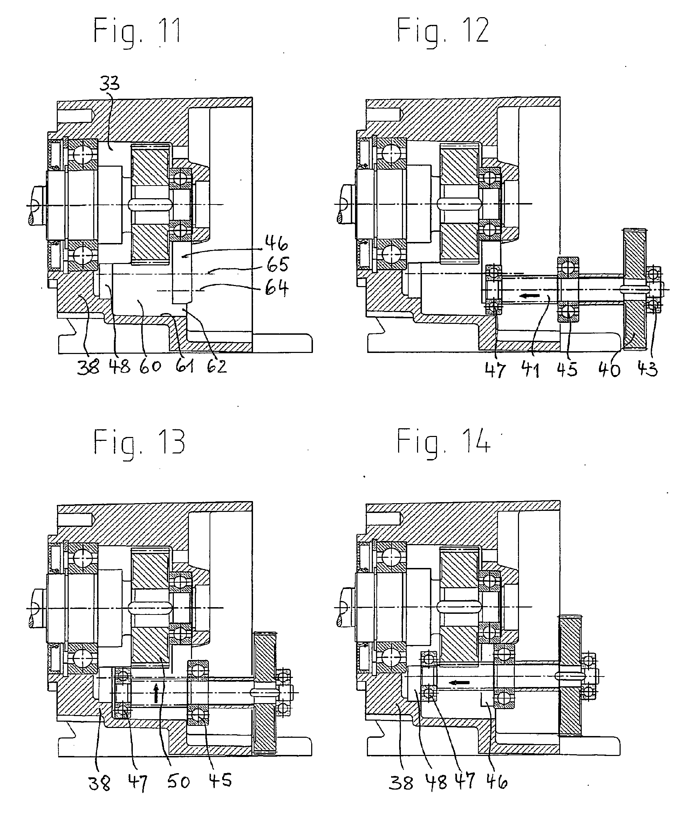

Die Erweiterung 60 der abtriebsseitigen Kammer 33 ist (dies ist ein Unterschied gegenüber dem ersten Ausführungsbeispiel) größer, als es für die Aufnahme der Zwischenwelle 41 erforderlich wäre. Sie ist nämlich so groß, daß sie bei der Montage dem abtriebsseitigen Lager 47 neben dem bereits montierten Abtriebszahnrad 50 den Durchgang gestattet. Sie ist zweckmäßigerweise teilweise durch eine zylindrische Fläche 61 begrenzt, deren Mittelachse 64 gegenüber der vorgesehenen Achse 65 der Zwischenwelle in Richtung weg von der Abtriebswelle 51 versetzt ist (Fig. 11).

Die Montageöffnung 62 bildet eine Erweiterung der für das Zwischenwellenlager 45 in der Zwischenwand 34 vorgesehenen Lagerbohrung 46. Die Erweiterung hat einen Ausschnitt in der Umfangsfläche der Lagerbohrung 46 zur Folge, in welchem das Lager 45 nicht unterstützt ist. Da die Breite dieses Ausschnitts aber geringer ist als der Durchmesser der Lagerbohrung, erstreckt sich die Umfangsfläche der Lagerbohrung 46 über mehr als 180°, nämlich beiderseits des zur Abtriebswelle gerichteten Radius 63 über den Winkel α. Dieser ist so groß, daß die Resultierende 64 der von der Verzahnung herrührenden Kräfte, die bei üblichen Verzahnungen um etwa 110° gegenüber diesem Radius 63 versetzt ist, innerhalb des von der Lagerbohrung 46 unterstützten Bereichs liegt.

Die Montageöffnung 62 und die Erweiterung 60 der abtriebsseitigen Kammer 33 sind groß genug, um die Zwischenwelle 41 mit dem vormontierten abtriebsseitigen Lager 47 gemäß Fig. 12 und 13 am Abtriebszahnrad 50 vorbei einzuschieben. Dies ermöglicht es, die Zwischenwelle 41 mit dem Zwischenzahnrad 40 und allen zugehörigen Lagern 43, 45, 47 als vormontierte Einheit in das Gehäuse einzubringen.

Dieser Vorgang ist in den Fig. 11 bis 14 in unterschiedlichen Stadien veranschaulicht. In Fig. 11 erkennt man unterhalb der Lagerbohrung 46 in der Zwischenwand 34 die Montageöffnung 62, an die sich hinterschnittfrei die Erweiterung 60 der abtriebsseitigen Kammer anschließt. Zunächst wird diese Einheit etwa in der Lage der Achse 64 in Pfeilrichtung der Fig. 12 vorgeschoben, bis das abtriebsseitige Lager 47 die Wand 38 erreicht, die seine Lagerbohrung 48 enthält. Sodann wird die Einheit in Pfeilrichtung der Fig. 13 quer verschoben, um die vorgesehene Achslage 65 zu erreichen. Dabei kommen das Ritzel 42 und das Abtriebszahnrad miteinander in Eingriff. Schließlich wird die vormontierte Einheit der Zwischenwelle 41 gemäß Fig. 14 in Pfeilrichtung vorgeschoben, bis die Lager 47 und 45 ihre vorgesehene Position in den Lagerbohrungen 48 und 46 (siehe Fig. 4) gefunden haben. Damit die Querverschiebung aus der Position der Fig. 13 in diejenige der Fig. 14 möglich ist, muß der freie axiale Abstand zwischen dem Abtriebszahnrad 50 und der die abtriebsseitige Lagerbohrung 48 bildenden Wand 38 mindestens der Breite des abtriebsseitigen Lagers 47 entsprechen.

Die für die vormontierte Zwischenwelle in der Zwischenwand vorgesehene Montageöffnung könnte auch von der Lagerbohrung 46 alleine ohne die Erweiterung 62 gebildet werden, wenn die Lagerbohrung groß genug ist. Wenn jedoch das Lager 45 dank der Erweiterung 62 und dank der zusätzlichen Lagerung der zwischenwelle durch das abtriebsseitige Lager 47 klein ausgeführt werden kann, hat dies den wichtigen Vorteil, daß das Zwischenwellenlager 45 und das Lager 52 der Abtriebswelle in der Zwischenwand 34 in etwa derselben Ebene untergebracht werden können; sie liegen im Querschnitt nebeneinander, wenn auch ggf. mit geringfügigem axialen Versatz. Mit geringem Aufwand können so die Baulänge und das Gewicht des Getriebes vermindert werden. Auch kann dadurch die Gehäusesteifigkeit, die erfindungsgemäß schon durch die Abwesenheit zusätzlicher Montageöffnungen erhöht wird, weiter gesteigert werden. Der geringe Kostenaufwand wird erreicht durch die gedrängte Bauweise, die kostengünstige Herstellbarkeit des Gehäuses im Druckgußverfahren, die Vormontierbarkeit sämtlicher Wellen, Zahnräder und Lager sowie den weiter unten erläuterten Verzicht auf Zentriermittel am Gehäusedeckel.

Das zweite Ausführungsbeispiel zeigt ein zweistufiges Getriebe. Es kann aber - ebenso wie dies in Fig. 1 gezeigt ist - dreistufig ausgebildet sein. Zu diesem Zweck enthalten die Zwischenwand 34 und der Deckel 31 weitere Lagerbohrungen 70, 71.

Im Hinblick auf den erstrebten geringen Kostenaufwand ist die dreifache Lagerung der Zwischenwelle bemerkenswert, die man im allgemeinen wegen statischer Überbestimmung vermeidet. Im vorliegenden Fall hat sie zwei wesentliche Vorteile. Zum einen ermöglicht sie die oben beschriebene günstige Dimensionierung des in der Zwischenwand angeordneten Zwischenwellenlagers, so daß es in einer Ebene mit einem Lager der Abtriebswelle angeordnet werden kann. Zum anderen gestattet sie die Zentrierung des Deckels an dem im Deckel angeordneten Lager 44 der Zwischenwelle 41. Diese genügt bei einer zweistufigen Ausführung des Getriebes. Damit die Zentrierung auch für die dreistufige Ausführung ausreicht, sind das Gehäuse und der Deckel mit zusätzlichen Paaren von Zentrierflächen 72, 73 ausgerüstet. Diese sind so angeordnet, daß sie eine die Zentrierung durch die Zwischenwelle ergänzende Zentrierwirkung bewirken. Diese wird dann erreicht, wenn die Zentrierflächenpaare einen Flächenanteil aufweisen, der einen von 90° verschiedenen Winkel mit einem von der Achse der Zwischenwelle ausgehenden Radius 74, 75 einschließen.

Die sich auf die Zentrierung des Deckels richtenden Merkmale verdienen Schutz ggf. unabhängig von den die kostengünstige Gehäuseherstellung oder Wellenmontage betreffenden Merkmalen. Das gilt auch für diejenigen Merkmale, die die kleine Ausführung des Zwischenwellenlagers in der zwischenwand und damit die Unterbringung in einer Ebene mit einem Lager der Abtriebswelle ermöglichen.

## Patentansprüche

1. Stirnradgetriebe mit einem einstückigen Gehäuse, das eine abtriebsseitige Kammer (5, 33) zwischen einer abtriebsseitigen Wand (24, 38)und einer Zwischenwand (4, 34) und eine antriebsseitige Kammer (12, 32) zwischen der Zwischenwand (4, 34) und einer antriebsseitigen Deckelöffnung bildet, sowie mit einem die Deckelöffnung schließenden Deckel (3, 31);
mit einer Abtriebswelle (27, 51), die in einem abtriebsseitigen Lager (10, 54) in einer abtriebsseitigen Lagerbohrung (11, 55) der abtriebsseitigen Wand (24, 38) und in einem abtriebsfernen Lager (8, 52) in der Zwischenwand (4, 34) gelagert ist und zwischen den beiden Lagern (8, 10; 52, 54) in der abtriebsseitigen Kammer (5, 33) ein Abtriebszahnrad (6, 50) trägt;
und mit einer Zwischenwelle (14, 41), die ein mit dem Abtriebszahnrad (6, 50) kämmendes Ritzel (15, 42) und in der antriebsseitigen Kammer (12, 32) ein Zwischenzahnrad (13, 40) trägt und die mindestens in einer Lagerbohrung (16, 46) der Zwischenwand (4, 34) gelagert ist;
**dadurch gekennzeichnet, daß**
die abtriebsseitige Lagerbohrung (11, 55) einen größeren Durchmesser als das Abtriebszahnrad (6, 50) und das abtriebsferne Lager (8, 52) aufweist, so daß die Abtriebswelle (27, 51) mit dem Abtriebszahnrad (6, 50) und ihren beiden Lagern (8, 10; 52, 54) als vormontierte Einheit durch die abtriebsseitige Lagerbohrung (11, 55) montierbar ist, wobei die abtriebsseitige Kammer (5, 33) keine weitere Montageöffnung aufweist;
und daß die abtriebsseitige Kammer (5, 33) ausschließlich von zwei Flächen (19, 20, 57, 61) begrenzt ist, von denen die erste (19, 57) hinterschnittfrei an die abtriebsseitige Lagerbohrung (11, 55) und die zweite (20, 61) hinterschnittfrei an die in der Zwischenwand (4, 34) für die Zwischenwelle (14, 41) vorgesehene Öffnung (16, 46, 62) anschließt, wobei die zweite Fläche (20, 61) sowie die die antriebsseitige Kammer (12, 32) begrenzenden Flächen hinterschnittfrei an die Deckelöffnung anschließen.

2. Getriebe nach Anspruch 1 , **dadurch gekennzeichnet, daß** die Zwischenwelle (14) in bezug auf ihr Ritzel (15) fliegend gelagert ist und die abtriebsseitige Kammer (5) im Bereich der zwischenwelle (14) ausschließlich von der hinterschnittfrei an die in der Zwischenwand (4) für die Zwischenwelle (14) vorgesehene Lagerbohrung (16) anschließenden Fläche (20) begrenzt ist.

3. Getriebe nach Anspruch 1, **dadurch gekennzeichnet, daß** das Ritzelende der zwischenwelle (41) in einem abtriebsseitigen Zwischenwellenlager (47) in der abtriebsseitigen Wand (38) gelagert ist.

4. Getriebe nach Anspruch 3, **dadurch gekennzeichnet, daß** die in der Zwischenwand (34) für die Zwischenwelle (41) vorgesehene Lagerbohrung (46) in der Richtung weg von der Abtriebswelle (51) durch eine Montageöffnung (62) erweitert ist, an die sich hinterschnittfrei eine Erweiterung (60) der abtriebsseitigen Kammer (33) anschließt, die hinreichend weit für den Montagedurchgang des abtriebseitigen Zwischenwellenlagers (47) neben dem Abtriebszahnrad (50) ausgebildet ist.

5. Getriebe nach Anspruch 4, **dadurch gekennzeichnet, daß** zwischen dem die Lagerbohrung (48) für das abtriebsseitige Zwischenwellenlager (47) bildenden Gehäuseteil (38) und dem Abtriebszahnrad (50) ein freier axialer Abstand besteht, der mindestens der axialen Breite dieses Lagers (47) gleicht.

6. Getriebe nach Anspruch 4 oder 5, **dadurch gekennzeichnet, daß** die in der Zwischenwand (34) für die Zwischenwelle (41) vorgesehene Lagerbohrung (46) über mindestens je 110° beiderseits ihres zu dem abtriebsfernen Lager (52) der Abtriebswelle (51) gerichteten Radius (63) geschlossen ist.

7. getriebe nach einem der Ansprüche 3 bis 6, **dadurch gekennzeichnet, daß** die in der Zwischenwand (41) vorgesehenen Lager (45, 52) im Querschnitt nebeneinander angeordnet sind.

8. Getriebe nach einem der Ansprüche 3 bis 7, **dadurch gekennzeichnet, daß** zum zentrieren des Gehäusedeckels (31) darin eine die Zwischenwelle (41) aufnehmende Zentrierbohrung (44) vorgesehen ist.

9. Getriebe nach Anspruch 8, **dadurch gekennzeichnet, daß** die Zentrierbohrung (44) ein drittes Lager (43) für die Zwischenwelle (41) zusätzlich zu dem abtriebsseitigen Zwischenwellenlager (47) und dem Lager (45) in der Zwischenwand (34) aufweist.

10. Getriebe nach Anspruch 8 oder 9, **dadurch gekennzeichnet, daß** im Falle eines zweistufigen Getriebes der Gehäusedeckel (31) außer der Zentrierbohrung (44) bzw. dem dritten Lager (43) keine weiteren Zentriermittel aufweist.

11. Getriebe nach Anspruch 8 oder 9, **dadurch gekennzeichnet, daß** im Falle eines dreistufigen Getriebes mit einer weiteren Zwischenwelle in der antriebsseitigen Kammer (32) ein weiteres Zentriermittel (72, 73) vorhanden ist, dessen Zentrierwirkung im wesentlichen quer zu einem von der Achse (65) der Zwischenwelle (41) ausgehenden Radius (74, 75) gerichtet ist.

## Claims

1. Spur gear transmission having a single-piece housing that forms a drive-output-side chamber (5, 33) between a drive-output-side wall (24, 38) and an intermediate wall (4, 34) and a drive-input-side chamber (12, 32) between the intermediate wall (4, 34) and a drive-input-side lid opening, and having a lid (3, 31) that closes the lid opening;
having a drive output shaft (27, 51) that is mounted in a drive-output-side bearing (10, 54) in a drive-output-side bearing bore (11, 55) of the drive-output-side wall (24, 38) and in a bearing (8, 52), which is remote from the drive output, in the intermediate wall (4, 34), and that supports a drive output gearwheel (6, 50) between the two bearings (8, 10; 52, 54) in the drive-output-side chamber (5, 33);
and having an intermediate shaft (14, 41) that supports a pinion (15, 42) that meshes with the drive output gearwheel (6, 50) and that supports an intermediate gearwheel (13, 40) in the drive-input-side chamber (12, 32) and that is mounted at least in one bearing bore (16, 46) of the intermediate wall (4, 34);
**characterized in that**
the drive-output-side bearing bore (11, 55) has a greater diameter than the drive output gearwheel (6, 50) and the bearing (8, 52) which is remote from the drive output, such that the drive output shaft (27, 51) with the drive output gearwheel (6, 50) and the two bearings (8, 10; 52, 54) thereof can be mounted as a pre-assembled unit through the drive-output-side bearing bore (11, 55), with the drive-output-side chamber (5, 33) having no further assembly opening;
and **in that** the drive-output-side chamber (5, 33) is delimited exclusively by two surfaces (19, 20; 57, 61), the first (19, 57) of which adjoins the drive-output-side bearing bore (11, 55) without an undercut and the second (20, 61) of which adjoins the opening (16, 46, 62), which is provided in the intermediate wall (4, 34), for the intermediate shaft (14, 41), without an undercut, with the second surface (20, 61) and the surfaces that delimit the drive-input-side chamber (12, 32) adjoining the lid opening without an undercut.

2. Transmission according to Claim 1, **characterized in that** the intermediate shaft (14) is mounted in an overhung fashion with regard to its pinion (15), and the drive-output-side chamber (5) is delimited in the region of the intermediate shaft (14) exclusively by the surface (20) that adjoins the bearing bore (16), which is provided in the intermediate wall (4), for the intermediate shaft (14) without an undercut.

3. Transmission according to Claim 1, **characterized in that** the pinion end of the intermediate shaft (41) is mounted in a drive-output-side intermediate shaft bearing (47) in the drive-output-side wall (38).

4. Transmission according to Claim 3, **characterized in that** the bearing bore (46), which is provided in the intermediate wall (34), for the intermediate shaft (41) is widened in the direction away from the drive output shaft (51) by an assembly opening (62) that is adjoined, without an undercut, by a widened portion (60) of the drive-output-side chamber (33), which widened portion (60) is formed so as to be of sufficient width to enable the drive-output-side intermediate shaft bearing (47) in addition to the drive output gearwheel (50) to be passed through for mounting.

5. Transmission according to Claim 4, **characterized in that** a free axial spacing is provided between the housing part (38), which forms the bearing bore (48) for the drive-output-side intermediate shaft bearing (47), and the drive output gearwheel (50), which free axial spacing is at least equal to the axial width of said bearing (47).

6. Transmission according to Claim 4 or 5,
**characterized in that** the bearing bore (46) that is provided in the intermediate wall (34) for the intermediate shaft (41) is closed over at least in each case 110° at both sides of its radius (63) that is directed towards the bearing (52), which is remote from the drive output, of the drive output shaft (51).

7. Transmission according to one of Claims 3 to 6, **characterized in that** the bearings (45, 52) that are provided in the intermediate wall (41) are arranged adjacent to one another in cross section.

8. Transmission according to one of Claims 3 to 7, **characterized in that**, to centre the housing lid (31), a centring bore (44) that holds the intermediate shaft (41) is provided in said housing lid (31).

9. Transmission according to Claim 8, **characterized in that** the centring bore (44) has a third bearing (43) for the intermediate shaft (41) in addition to the drive-output-side intermediate shaft bearing (47) and the bearing (45) in the intermediate wall (34).

10. Transmission according to Claim 8 or 9,
**characterized in that**, in the case of a two-stage transmission, the housing lid (31) has no further centring means other than the centring bore (44) or the third bearing (43).

11. Transmission according to Claim 8 or 9,
**characterized in that**, in the case of a three-stage transmission with a further intermediate shaft in the drive-input-side chamber (32), a further centring means (72, 73) is provided, the centring action of which is directed substantially transversely with respect to a radius (74, 75) that extends from the axis (65) of the intermediate shaft (41).

## Revendications

1. Transmission par engrenage droit, avec un carter intégral qui forme une chambre côté sortie de couple (5, 33) entre une paroi côté sortie de couple (24, 38) et une paroi intermédiaire (4, 34) et une chambre côté entrée de couple (12, 32) entre la paroi intermédiaire (4, 34) et une ouverture de couvercle côté entrée de couple, ainsi qu'avec un couvercle (3, 31) fermant l'ouverture de couvercle ;
avec un arbre mené (27, 51) qui est monté sur un palier côté sortie de couple (10, 54) dans un perçage de palier côté sortie de couple (11, 55) de la paroi côté sortie de couple (24, 38) et dans un palier éloigné de la sortie de couple (8, 52) dans la paroi intermédiaire (4, 14) et supporte entre les deux paliers (8, 10 ; 52, 54) dans la chambre côté sortie de couple (5, 33) une roue dentée (6, 50) ;
et avec un arbre intermédiaire (14, 41) qui supporte un pignon (15, 42) en prise avec la roue dentée menée (6, 50) et une roue dentée intermédiaire (13, 40) dans la chambre côté entrée de couple (12, 32) et qui est monté dans au moins un perçage de palier (16, 46) de la paroi intermédiaire (4, 34) ;
**caractérisée en ce que**
le perçage de palier côté sortie de couple (11, 55) présente un diamètre supérieur à la roue dentée menée (6, 50) et le palier éloigné de la sortie de couple (8, 52), de sorte que l'arbre mené (27, 51) peut être installé avec la roue dentée menée (6, 50) et ses deux paliers (8, 10 ; 52, 54) comme une unité préassemblée, à travers le perçage de palier côté sortie de couple (11, 55), dans laquelle la chambre côté sortie de couple (5, 33) ne présente aucune autre ouverture d'installation ;
et **en ce que** la chambre côté sortie de couple (5, 33) est délimitée exclusivement par deux surfaces (19, 20 ; 57, 61) dont la première (19, 57) est adjacente sans contre-dépouille au perçage de palier côté sortie de couple (11, 55) et la deuxième (20, 61) est adjacente sans contre-dépouille à l'ouverture (16, 46, 62) prévue dans la paroi intermédiaire (4, 34) pour l'arbre intermédiaire (14, 41), dans laquelle la deuxième surface (20, 61) ainsi que les surfaces délimitant la chambre côté entrée de couple (12, 22) sont adjacentes sans contre-dépouille à l'ouverture de couvercle.

2. Transmission selon la revendication 1, **caractérisée en ce que** l'arbre intermédiaire (14) est monté en porte-à-faux par rapport à son pignon (15) et la chambre côté sortie de couple (5) est délimitée dans la zone de l'arbre intermédiaire (14) exclusivement par la surface (20) adjacente sans contre-dépouille au perçage de palier (16) prévu dans la paroi intermédiaire (4) pour l'arbre intermédiaire (14).

3. Transmission selon la revendication 1, **caractérisée en ce que** l'extrémité de pignon de l'arbre intermédiaire (41) est montée dans un palier d'arbre intermédiaire côté sortie de couple (42) dans la paroi côté sortie de couple (38).

4. Transmission selon la revendication 3, **caractérisée en ce que** le perçage de palier (46) prévu dans la paroi intermédiaire (34) pour l'arbre intermédiaire (41) est élargi dans la direction s'éloignant de l'arbre mené (51) par une ouverture d'installation (62) suivie sans contre-dépouille d'un élargissement (60) de la chambre côté sortie de couple (33) qui est réalisée suffisamment large pour le passage d'installation du palier d'arbre intermédiaire côté sortie de couple (47) à côté de la roue dentée menée (50).

5. Transmission selon la revendication 4, **caractérisée en ce qu'**entre la partie de carter (38) formant le perçage de palier (48) pour le palier d'arbre intermédiaire côté sortie de couple (47) et la roue dentée menée (50), il existe une distance axiale libre qui est égale au moins à la largeur axiale dudit palier (47).

6. Transmission selon la revendication 4 ou 5, **caractérisée en ce que** le perçage de palier (46) prévu dans la paroi intermédiaire (34) pour l'arbre intermédiaire (41) est fermé sur au moins respectivement 110° des deux côtés de son rayon (63) dirigé vers le palier éloigné de la sortie de couple (52) de l'arbre mené (51).

7. Transmission selon l'une quelconque des revendications 3 à 6, **caractérisée en ce que** les paliers (45, 52) prévus dans la paroi intermédiaire (41) sont disposés côte à côte en section transversale.

8. Transmission selon l'une quelconque des revendications 3 à 7, **caractérisée en ce que** pour le centrage du couvercle de carter (31), un perçage de centrage (44) recevant l'arbre intermédiaire (41) est prévu dans celui-ci.

9. Transmission selon la revendication 8, **caractérisée en ce que** le perçage de centrage (44) présente un troisième palier (43) pour l'arbre intermédiaire (41) en plus du palier d'arbre intermédiaire côté sortie de couple (47) et du palier (45) dans la paroi intermédiaire (34).

10. Transmission selon la revendication 8 ou 9, **caractérisée en ce que** pour une transmission à deux étages, le couvercle de carter (31) ne présente aucun autre moyen de centrage en dehors du perçage de centrage (44) du troisième palier (43).

11. Transmission selon la revendication 8 ou 9, **caractérisée en ce que** pour une transmission à trois étages avec un arbre intermédiaire supplémentaire dans la chambre côté entrée de couple (32), il existe un autre moyen de centrage (72, 73) dont l'effet de centrage est dirigé substantiellement transversalement à un rayon (74, 75) partant de l'axe (65) de l'arbre intermédiaire (41).
